# EUROPEAN PATENT APPLICATION

(11) **EP 3 217 709 A1**
(43) Date of publication of application: **13.09.2017**
(21) Application number: 14905531.1
(22) Date of filing: 06.11.2014
(51) Int. Cl.: H04W 24/08, H04W 72/04

(54) **CONTROL CHANNEL TRANSMISSION METHOD, DEVICE AND COMMUNICATION SYSTEM**

(71) Applicant: Fujitsu Limited, Kawasaki-shi, Kanagawa 211-8588 (JP)
(72) Inventor: LI, Hongchao, Beijing 100025 (CN); ZHANG, Yi, Beijing 100025 (CN); ZHOU, Hua, Beijing 100025 (CN)
(74) Representative: Cooper-Rolfe, Elizabeth Louise
(86) International application number: PCT/CN2014/090484
(87) International publication number: WO 2016/070383

(57) **Abstract**

Embodiments of this disclosure provide a method and apparatus for transmitting a control channel and a communication system. The communication system includes terminal equipment and an eNB; wherein, the eNB is configured to transmit a control channel in a resource of the control channel, and indicate the terminal equipment the resource of the control channel; and the terminal equipment is configured to determine the resource of the control channel, and detect the control channel in the determined resource of the control channel. With the embodiments of this disclosure, narrowband UE may operate efficiently on wideband carriers.

## Description

### Field

This disclosure relates to the field of communication technologies, and in particular to a method and apparatus for transmitting a control channel and a communication system.

### Background

Machine type communication (MTC) is a very important technology for income and services of operators, which may use a large quantity of low-cost fixed terminals to provide various application services, such as report of readings of a water meter, an electrical meter and a gas meter, security surveillance, and public security, etc., via autonomous communication between machines.

As increase of applications and services provided by a cellular network system, the number of UEs and the number of terminals having cellular communication modules will also increase, the number of MTC UEs being closely related to various reading meters and surveillance systems is a typical example. All resources of the system will be extremely important to the service provision, and will possibly lower allocation efficiencies.

An importance feature of an MTC terminal is that it is possibly be installed indoors relatively highly isolated from the outside, such as in a basement, thereby resulting in that pathloss of a wireless link between the MTC terminal and an eNB is relatively large. Rise of pathloss increases complexity of coverage of UE and a signal receiving performance. Therefore, it is a problem needing to be solved to guarantee coverage performances of uplink channels and downlink channels on the premise of maintaining low cost of an MTC terminal.

Currently, it is usual that accumulated gains of energies are obtained and probabilities of correct transmission are increased by using multi-times repeated transmission. However, in order to lower cost, it is possible that an MTC terminal is only equipped with narrowband RF modules, hence, it may only receive and transmit wireless signals of a bandwidth of 1.4 MHz, for example. Thus, a physical layer control channel in an existing (Rel. 8-12) long-term evolution (LTE) system is unable to serve for MTC terminals in carriers of a bandwidth exceeding 1.4 MHz, or in other words, these narrowband MTC terminals are unable to operate in wideband carriers, whatever reception or transmission.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to solve the problems put forward in the Background, embodiments of this disclosure provide a method and apparatus for transmitting a control channel and a communication system, such that narrowband UE can operate efficiently in wideband carriers.

According to a first aspect of the embodiments of this disclosure, there is provided a method for transmitting a control channel, the method including:
a resource of the control channel is determined by terminal equipment; and
the control channel is detected in the determined resource of the control channel by the terminal equipment.

According to a second aspect of the embodiments of this disclosure, there is provided a method for transmitting a control channel, the method including:
a control channel is transmitted in a resource of the control channel by an eNB; and
terminal equipment is indicated the resource of the control channel by the eNB, so that the terminal equipment detects the control channel in the resource of the control channel.

According to a third aspect of the embodiments of this disclosure, there is provided an apparatus for transmitting a control channel, applicable to terminal equipment, the apparatus including:
a determining unit configured to determine a resource of a control channel; and
a detecting unit configured to detect the control channel in the resource of the control channel determined by the determining unit.

According to a fourth aspect of the embodiments of this disclosure, there is provided an apparatus for transmitting a control channel, applicable to an eNB, the apparatus including:
a first transmitting unit configured to transmit a control channel in a resource of the control channel; and
a detecting unit configured to indicate terminal equipment the resource of the control channel, so that the terminal equipment detects the control channel in the resource of the control channel.

According to a fifth aspect of the embodiments of this disclosure, there is provided terminal equipment, including the apparatus for transmitting a control channel as described in the third aspect.

According to a sixth aspect of the embodiments of this disclosure, there is provided an eNB, including the apparatus for transmitting a control channel as described in the fourth aspect.

According to a seventh aspect of the embodiments of this disclosure, there is provided a communication system, including terminal equipment and an eNB, wherein,
the eNB is configured to transmit a control channel in a resource of the control channel, and indicate the terminal equipment the resource of the control channel;
and the terminal equipment is configured to determine the resource of the control channel, and detect the control channel in the determined resource of the control channel.

According to another aspect of the embodiments of this disclosure, there is provided a computer readable program code, which, when executed in an apparatus for transmitting a control channel or terminal equipment, will cause a computer unit to carry out the method for transmitting a control channel as described in the first aspect in the apparatus for transmitting a control channel or the terminal equipment.

According to a further aspect of the embodiments of the present disclosure, there is provided a computer readable medium, including a computer readable program code, which will cause a computer unit to carry out the method for transmitting a control channel as described in the first aspect in an apparatus for transmitting a control channel or terminal equipment.

According to still another aspect of the embodiments of this disclosure, there is provided a computer readable program code, which, when executed in an apparatus for transmitting a control channel or an eNB, will cause a computer unit to carry out the method for transmitting a control channel as described in the second aspect in the apparatus for transmitting a control channel or the eNB.

According to yet another aspect of the embodiments of the present disclosure, there is provided a computer readable medium, including a computer readable program code, which will cause a computer unit to carry out the method for transmitting a control channel as described in the second aspect in an apparatus for transmitting a control channel or an eNB.

An advantage of the embodiments of this disclosure exists in that with the method, apparatus and system of the embodiments of this disclosure, narrowband UE may operate efficiently in wideband carriers.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. In the drawings:
FIG. 1 is a flowchart of an implementation of a method for transmitting a control channel of an embodiment of this disclosure;
FIG. 2 is a schematic diagram of resource partition of this embodiment;
FIG. 3 is a flowchart of another implementation of a method for transmitting a control channel of an embodiment of this disclosure;
FIG. 4 is a schematic diagram of performing retransmission operations on a control channel;
FIG. 5 is a schematic diagram of an implementation of a structure of an apparatus for transmitting a control channel of an embodiment of this disclosure;
FIG. 6 is a schematic diagram of another implementation of a structure of an apparatus for transmitting a control channel of an embodiment of this disclosure;
FIG. 7 is a schematic diagram of an implementation of a structure of terminal equipment of an embodiment of this disclosure;
FIG. 8 is a schematic diagram of an implementation of a structure of an eNB of an embodiment of this disclosure; and
FIG. 9 is a schematic diagram of a structure of a communication system of an embodiment of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various implementations of this disclosure shall be described below with reference to the accompanying drawings. These implementations are illustrative only, and are not intended to limit this disclosure.

In order to lower a size of a buffer and processing pressure of a baseband, a broadcast channel scheduled by a physical layer control channel of a common search space and a unicast channel scheduled by a physical layer control channel of a UE-specific search space need not be transmitted within the same subframe. Hence, for a certain UE, they need not be received at the same time within the same subframe.

Cyclic redundancy check (CRC) of the control channel of the common search space may be scrambled by a P-RNTI (paging-RNTI, paging-radio network temporary identifier), an SI-RNTI (system information-radio network temporary identifier) and an RA-RNTI (random access-radio network temporary identifier), for use in paging UE, broadcasting a system message, or transmitting a random access response.

CRC of the control channel of the UE-specific search space may be scrambled by a C-RNTI (cell-radio network temporary identifier), an SPS C-RNTI (semi-persistent scheduling cell-radio network temporary identifier), a TPC-PUCCH-RNTI (transmission power control-physical uplink control channel-radio network temporary identifier), a TPC-PUSCH-RNTI (transmission power control-physical uplink shared channel-radio network temporary identifier) and a temporary C-RNTI (temporary cell-radio network temporary identifier).

As a search space of a conventional control channel occupies a whole bandwidth for a narrowband MTC terminal, it is unavailable, and a control channel in the search space needs to perform resource allocation again. And in order to lower power consumption of the MTC terminal, it is necessary to lower the number of times of blind detection of a control channel of a receiver end, or blind detection of a specific control channel is only needed to be performed on some resources.

Based on the above studies, the embodiments of this disclosure provide a method and apparatus for transmitting a control channel and a communication system, such that narrowband UE may operate efficiently in wideband carriers. The method, apparatus and system of these embodiments shall be described below with reference to the accompanying drawings.

### Embodiment 1

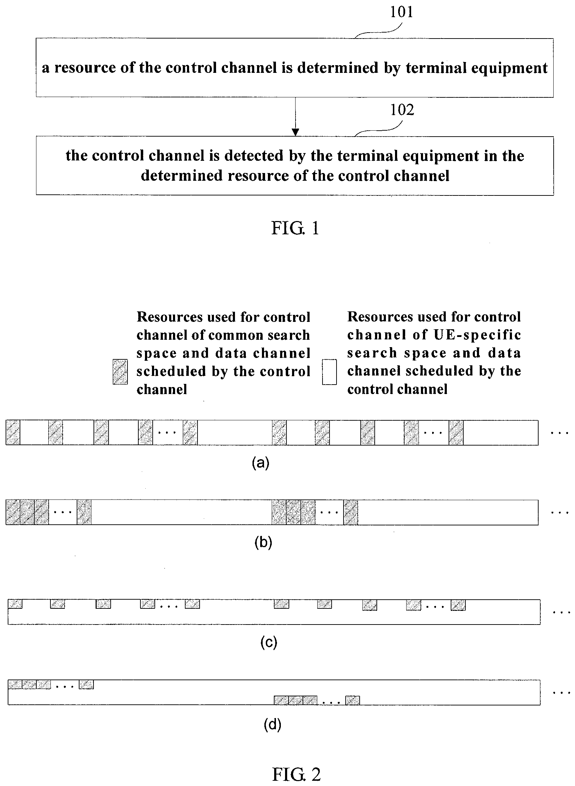

An embodiment of this disclosure provides a method for transmitting a control channel. FIG. 1 is a flowchart of the method. Referring to FIG. 1, the method includes:
step 101: a resource of the control channel is determined by terminal equipment; and
step 102: the control channel is detected by the terminal equipment in the determined resource of the control channel.

In step 101, the control channel refers to a control channel of a common search space and/or a control channel of a UE-specific search space, that is, in the step 101, the terminal equipment may determine the resource of the control channel of the common search space, and may determine the resource of the control channel of the UE-specific search space, or may determine the resource of the control channel of the common search space and the resource of the control channel of the UE-specific search space at the same time. In this embodiment, the terminal equipment may be narrowband UE, and may also be MTC UE.

In an implementation of step 101, the terminal equipment and an eNB make an agreement on resources of the control channel in advance. For example, the terminal equipment and an eNB make an agreement in advance on fixed subframes and/or fixed physical resource block pairs in which the control channel is transmitted, the eNB may transmit control channels in these resources, and the terminal equipment may blindly detect or demodulate control channels in these resources. And the terminal equipment may determine the resource of control channel according to the agreement.

In this implementation, after the terminal equipment demodulates a synchronization signal and a physical broadcast channel, it performs demodulation of the control channel only on a part of the agreed resources. And after accessing to a network, it performs demodulation of a control channel of a unicast traffic in subframes to which the UE-specific search space corresponds, and performs demodulation of a control channel of a broadcast traffic in subframes to which the common search space corresponds. Thus, in any subframe, the number of times of blind detection of a control channel by UE may be lowered relative to UE in previous releases, thereby achieving a goal of lowering UE complexity and power consumption.

In this implementation, the synchronization signal may be a primary synchronization signal (PSS), or a secondary synchronization signal (SSS), or both. And the physical broadcast channel may be a conventional physical broadcast channel (PBCH), and may also be a physical broadcast channel for MTC UE (MTC-PBCH).

In this implementation, in order to improve flexibility, the above physical broadcast channel may contain a transmission mode of the above control channel and/or indication information on resource partition. The transmission mode here may include whether to perform multiple times of retransmission of the control channel, and the number of times of retransmission, etc. In this implementation, by retransmission, a probability of correct reception of control channels of some UEs being restricted in coverage may be improved. And the resource partition here may include a time domain resource, a frequency domain resource, whether it is continuous transmission, or whether resources are continuously allocated, etc.

In this implementation, in addition to the above resources of the control channel, the eNB and the terminal equipment may further make an agreement on resources of a data channel scheduled by the control channel in advance, thereby lowering complexity of demodulating data channels by the terminal equipment, and reducing demodulation latency.

With the method of this implementation, the terminal equipment detects the physical broadcast channel after detecting a synchronization signal, and then demodulates the control channel in the common search space, so as to acquire system information and access to a corresponding network. Hence, narrowband UE may efficiently operate in wideband carriers, and furthermore, power consumption in receiving may be saved.

In another implementation of step 101, different from the previous implementation, the resource of the control channel is indicated by the eNB via a physical broadcast channel, rather than agreed in advance. In this implementation, after the terminal equipment detects a synchronization signal, it may demodulate the physical broadcast channel accordingly, read information related on the control channel therefrom, and determine the resource of the control channel according to the information contained in the physical broadcast channel.

In this implementation, the physical broadcast channel may contain resource configuration information on the above control channel and/or the number of times of retransmission of the above control channel and/or the number of times of retransmission of the data channel scheduled by the above control channel. The terminal equipment may determine the resource of the control channel according to the above resource configuration information. The terminal equipment may determine how many times the above control channel and/or the data channel scheduled by the control channel is retransmitted according to the above numbers of times of retransmission, the numbers of times of retransmission may be indicated by one or more of 10 bits reserved in the physical broadcast channel. For example, the number of times of retransmission of the control channel of the common search space and/or the number of times of retransmission of the data channel scheduled by it is/are indicated by adding indication information of 1 bit in an existing physical broadcast channel, as shown in Table 1. For another example, the number of times of retransmission of the control channel of the common search space and/or the number of times of retransmission of the data channel scheduled by it is/are indicated by adding indication information of 2 bits in an existing physical broadcast channel, as shown in Table 2.

**Table 1**

| Indication bits | 0 | 1 |
|---|---|---|
| Number of times of retransmission of the control channel of the common search space and/or the number of times of retransmission of the data channel scheduled by it | 1 | 20 |

**Table 2**

| Indication bits | 00 | 01 | 10 | 11 |
|---|---|---|---|---|
| Number of times of retransmission of the control channel of the common search space and/or the number of times of retransmission of the data channel scheduled by it | 1 | 10 | 20 | 40 |

Hence, the terminal equipment may detect and receive the above control channel of a corresponding number of times according to the number of times of retransmission of the control channel, and/or detect and receive the above data channel of a corresponding number of times according to the number of times of retransmission of the data channel, thereby achieving energy accumulation, improving a correctness rate of demodulation, and reducing latency.

In this implementation, in order that narrowband UE may be adapted to wideband carriers and deployment at a network side, the resource configuration information on the above control channel may contain a resource partition mode of the above control channel, such as whether the resource is continuous or discontinuous in the time domain, and whether the resource of the control channel of the common search space and the resource of the control channel of the UE-specific search space are identical or overlapped. In this implementation, the resource configuration information may also be indicated by bits, as shown in Table 3 and FIG. 2.

**Table 3**

| Indication bits | 00 | 01 | 10 | 11 |
|---|---|---|---|---|
| Resource | dispersedly in | continuously in | dispersedly in | continuously in |
| multiplexing indication on the common search space and the UE-specific search space | time domain. Identical parts of bands are used | time domain. Identical parts of bands are used | time domain. Overlapped parts of bands are used | time domain. Overlapped parts of bands are used |

Where, indication bit "00" corresponds to the resource partition mode of (a) in FIG. 2, indication bit "01" corresponds to the resource partition mode of (b) in FIG. 2, indication bit "10" corresponds to the resource partition mode of (c) in FIG. 2, and indication bit "11" corresponds to the resource partition mode of (d) in FIG. 2.

In this implementation, the above configuration modes are illustrative only. Alternatively, the physical broadcast channel may further contain information indicating a transmission starting position of the resource of the above control channel and number of times of retransmission of the above control channel, and/or information indicating a frequency domain position of the resource of the above control channel and number of times of retransmission of the above control channel, or contain any combination of the above information. Furthermore, the information contained in the physical broadcast channel may also be used for other purposes at the same time, and this embodiment is not limited thereto.

In this implementation, in addition to the above resources of the control channel, the physical broadcast channel may further indicate the resources of the data channel scheduled by the control channel, thereby lowering complexity of demodulating data channels by the terminal equipment, and reducing demodulation latency.

In this implementation, meanings of the physical broadcast channel, the control channel and the synchronization signal are identical to those in the previous embodiment, and shall not be described herein any further.

With the method of this implementation, by indicating the resources of the control channel via the physical broadcast channel, narrowband UE may efficiently operate in wideband carriers, and power consumption in receiving may be saved.

In a further implementation of step 101, in order that narrowband UE may be adapted to wideband carriers and deployment at a network side, the eNB may indicate, via a message in a random access process, the resources of the control channel allocated for the UE. In this implementation, the eNB may indicate the UE the resources of the control channel allocated for it by adding resource indication information to the above message. Hence, the terminal equipment may obtain the above resource indication information from the eNB in the random access process, and determine the resources of the control channel according to the resource indication information.

In this implementation, the message in the above random access process may be random access response (RAR) message, and may also be Message 4. After the terminal equipment transmits a preamble in the random access process, if the eNB side succeeds in demodulation, the eNB may allocate semi-persistent control channel time frequency domain resources for the terminal equipment in the RAR or Message 4, and then the terminal equipment blindly detects and demodulates the control channel in a corresponding resource.

In this implementation, Message 4 may be in a contention solution step, and may also be in a fourth step or last step of random access.

In this implementation, the above resource indication information may include the resources of the above control channel and/or the transmission mode of the above control channel. In this implementation, the transmission mode here may include the number of times of retransmission of the control channel, and may further include other information. And an indication manner of the number of times of retransmission may be identical to or different from that in the previous implementations.

In this embodiment, the resources of the control channel of the common search space and the resources of the control channel of the UE-specific search space may be separated in the time domain; however, this embodiment is not limited thereto.

With the method of this embodiment, narrowband UE may efficiently operate in wideband carriers, and a goal of saving power consumption in receiving may be achieved. And as a low-cost MTC terminal is unable to simultaneously receive broadcast data scheduled by the control channel of the common search space and the unicast data scheduled by the control channel of the UE-specific search space, time division multiple access is performed on the two parts of resources, and this is advantageous to lowering complexity of demodulation of the UE and lowering the power consumption.

### Embodiment 2

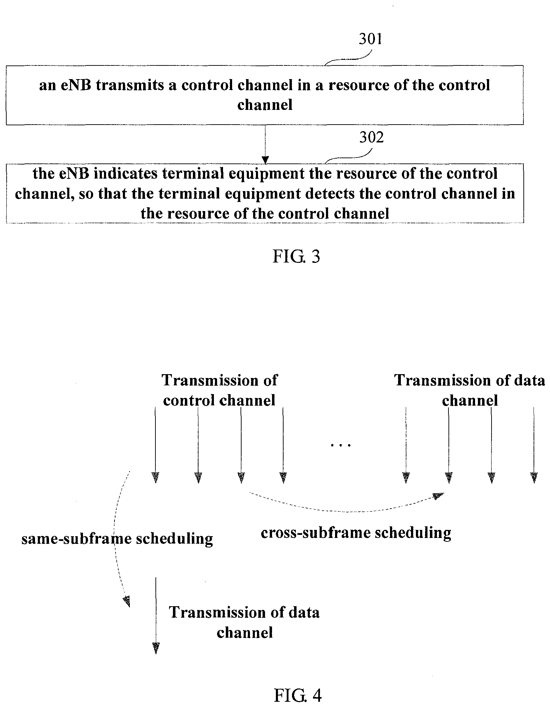

An embodiment of this disclosure provides a method for transmitting a control channel. This method is processing at the eNB side corresponding to the method in Embodiment 1; wherein, contents identical to those in Embodiment 1 shall not be described herein any further. FIG. 3 is a flowchart of the method. Referring to FIG. 3, the method includes:
step 301: an eNB transmits a control channel in a resource of the control channel; and
step 302: the eNB indicates terminal equipment the resource of the control channel, so that the terminal equipment detects the control channel in the resource of the control channel.

In this embodiment, corresponding to the first implementation in Embodiment 1, the eNB may indicate the terminal equipment the resource of the control channel according to an agreement between the eNB and the terminal equipment. Furthermore, the eNB may transmit the transmission mode of the control channel and/or indication information on resource partition via a physical broadcast channel, so as to increase flexibility.

In this embodiment, corresponding to the second implementation in Embodiment 1, the eNB may indicate the resource of the control channel via a physical broadcast channel. In this embodiment, the physical broadcast channel may include resource configuration information of the control channel, and/or the number of retransmission of the control channel, and/or the number of retransmission of a data channel scheduled by the control channel. Hence, the terminal equipment may determine the resource of the control channel according to the resource configuration information, and detect and receive the control channel of a corresponding number of times according to the number of times of retransmission of the control channel, and/or detect and receive the data channel of a corresponding number of times according to the number of times of retransmission of the data channel.

In this embodiment, in performing multiple times of retransmission on the control channel, the eNB may use cross-subframe scheduling and same-subframe scheduling at the same time, hence, coverage-limited UEs and coverage-unlimited UEs may be satisfied at the same time. Especially for a common broadcast channel, as all UEs need to receive, the number of times of transmission cannot be adjusted according to a channel condition or a coverage condition of each UE as that in a unicast channel. Hence, a combination of them may not only reduce latency of non-interference-limited UE (by using the same-subframe scheduling), but also take into account that interference-limited UE uses the cross-subframe scheduling and repeated transmission. FIG. 4 is a schematic diagram of using the cross-subframe scheduling and the same-subframe scheduling by the eNB at the same time.

In this embodiment, the eNB may further indicate a resource partition mode of the above control channel via the physical broadcast channel, such as whether the resources are scattered or continuous in the time domain, and whether the resources are identical or overlapped in the frequency domain, etc. Alternatively, the physical broadcast channel may further indicate a transmission starting position of the resource of the above control channel and number of times of retransmission of the above control channel. Alternatively, the physical broadcast channel may further indicate a frequency domain position of the resource of the above control channel and number of times of retransmission of the above control channel.

In this embodiment, corresponding to the third implementation in Embodiment 1, the eNB may indicate the resource of the control channel via a message in a random access process, such as an RAR message or Message 4. Alternatively, the message may further indicate a transmission mode of the above control channel, such as the number of times of retransmission, etc.

With the method of this embodiment, narrowband UE may efficiently operate in wideband carriers, and a goal of saving power consumption in receiving may be achieved. And as the resource of the control channel of the common search space and the resource of the control channel of the UE-specific search space are separated in the time domain, it is advantageous to lowering complexity of demodulation of the UE and lowering the power consumption.

### Embodiment 3

An embodiment of this disclosure provides an apparatus for transmitting a control channel, applicable to terminal equipment, such as an MTC terminal or other narrowband UEs. As principles of the apparatus for solving problems are similar to that of the method of Embodiment 1, the implantation of the method of Embodiment 1 may be referred to for implementation of the apparatus, with identical contents being not going to be described herein any further.

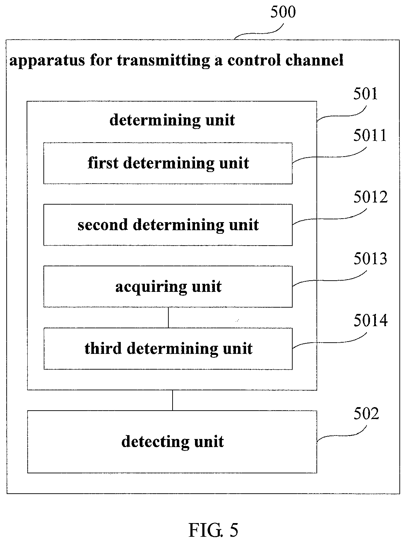

FIG. 5 is a schematic diagram of a structure of the apparatus. Referring to FIG. 5, the apparatus 500 for transmitting a control channel includes a determining unit 501 and a detecting unit 502.

In this embodiment, the determining unit 501 is configured to determine a resource of the control channel. The control channel here may be a control channel of a common search space, and may also be a control channel of a UE-specific search space.

In this embodiment, the detecting unit 502 is configured to detect the control channel in the resource of the control channel determined by the determining unit 501.

In an implementation, as shown in FIG. 5, the determining unit 501 may include:
a first determining unit 5011 configured to determine the resource of the control channel according to a fixed subframe and/or a fixed physical resource block pair for transmitting a control channel agreed between the terminal equipment and an eNB after the terminal equipment detects a synchronization signal and a physical broadcast channel.

In this implementation, the resource of the control channel is agreed between the terminal equipment and the eNB in advance, and the first determining unit 501 may directly determine the resource of the control channel according to the agreement. Hence, the detecting unit 502 may directly detect the control channel in the agreed resource.

In this implementation, the physical broadcast channel may include: a transmission mode of the above control channel and/or indication information on resource partition, this may, as described above, improve flexibility of configuration.

In another implementation, as shown in FIG. 5, the determining unit 501 may include:
a second determining unit 5012 configured to determine the resource of the control channel according to information included in the physical broadcast channel after the terminal equipment detects a synchronization signal and a physical broadcast channel.

In this implementation, the eNB indicates the resource of the control channel via the physical broadcast channel, and the second determining unit 5012 may determine the resource of the control channel according to indication of the physical broadcast channel. Hence, the detecting unit 502 may detect the control channel in the resource of the control channel indicated by the physical broadcast channel.

In this implementation, the physical broadcast channel may include resource configuration information of the above control channel, and/or the number of retransmission of the control channel, and/or the number of retransmission of a data channel scheduled by the control channel. Hence, the determining unit 501 may determine the resource of the control channel according to the resource configuration information, and the detecting unit 502 may detect and receive the control channel according to the number of retransmission of the control channel, and/or detect and receive the above data channel according to the number of retransmission of the data channel, thereby improving a correctness rate of demodulation by energy accumulation, and reducing latency.

In this implementation, the physical broadcast channel may further include positions of the resource of the control channel in a time domain and in a frequency domain, and/or a transmission starting position of the resource of the control channel and the number of retransmission, and/or a frequency domain position of the resource of the control channel and the number of retransmission.

In another implementation, as shown in FIG. 5, the determining unit 501 may include: an acquiring unit 5013 and a third determining unit 5014. In this implementation, the acquiring unit 5013 may obtain resource indication information of the control channel from the eNB when the terminal equipment is in a random access process, and the third determining unit 5014 may determine the resource of the control channel according to the resource indication information.

In this implementation, the eNB may indicate the resource of the control channel via a message in a random access process, such as an RAR message or Message 4. Hence, the acquiring unit 5013 and the third determining unit 5014 may obtain the resource of the above control channel from the message, and the detecting unit 502 may detect the control channel in the resource of the control channel indicated by the message.

In this implementation, the resource indication information may include the resource of the control channel. And alternatively, it may include the transmission mode of the control channel, such as the number of times of retransmission of the control channel.

With the apparatus of this embodiment, narrowband UE may efficiently operate in wideband carriers, and a goal of saving power consumption in receiving may be achieved.

### Embodiment 4

An embodiment of this disclosure provides an apparatus for transmitting a control channel, applicable to an eNB. As principles of the apparatus for solving problems are similar to that of the method of Embodiment 2, the implantation of the method of Embodiment 2 may be referred to for implementation of the apparatus, with identical contents being not going to be described herein any further.

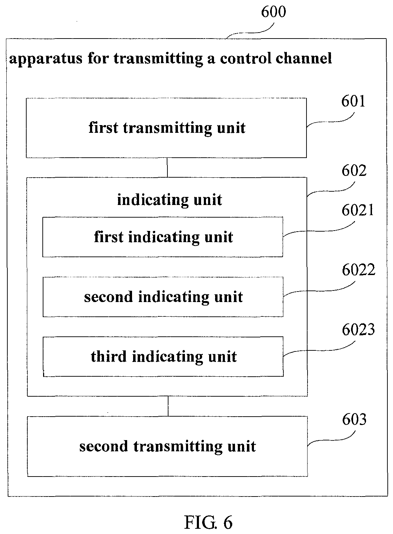

FIG. 6 is a schematic diagram of a structure of the apparatus. Referring to FIG. 6, the apparatus 600 for transmitting a control channel includes a first transmitting unit 601 and an indicating unit 602.

In this embodiment, the first transmitting unit 601 may transmit a control channel in a resource of the control channel. The control channel here may be a control channel of a common search space, and may also be a control channel of a UE-specific search space.

In this embodiment, the indicating unit 602 may indicate terminal equipment the resource of the control channel, so that the terminal equipment detects the control channel in the resource of the control channel.

In an implementation, the resource of the control channel is agreed by the terminal equipment and the eNB in advance, and the indicating unit 602 includes:
a first indicating unit 6021 configured to indicate the terminal equipment the resource of the control channel according to the agreement between the eNB and the terminal equipment.

In this implementation, the eNB may further indicate a transmission mode of the control channel and/or resource partition via a physical broadcast channel, and the apparatus 600 further includes:
a second transmitting unit 603 configured to transmit the transmission mode of the control channel and/or indication information on resource partition via a physical broadcast channel, thereby improving flexibility.

In another implementation, the resource of the above control channel is indicated via a physical broadcast channel, and the indicating unit 602 includes:
a second indicating unit 6022 configured to indicate the resource of the control channel via information contained in the physical broadcast channel.

In this implementation, the physical broadcast channel includes resource configuration information of the control channel, and/or the number of retransmission of the control channel, and/or the number of retransmission of a data channel scheduled by the control channel. Hence, the terminal equipment may determine the resource of the control channel according to the resource configuration information, and detect and receive the control channel according to the number of retransmission of the control channel, and/or detect and receive the above data channel according to the number of retransmission of the data channel.

In this implementation, the information included in the physical broadcast channel may further include positions of the resource of the control channel in a time domain and a frequency domain, and/or a transmission starting position of the resource of the control channel and the number of retransmission, and/or a frequency domain position of the resource of the control channel and the number of retransmission.

In another implementation, the resource of the above control channel is indicated via a message in a random access process, and the indicating unit 602 includes:
a third indicating unit 6023 configured to indicate the terminal equipment the resource of the control channel via resource indication information included in the message in the random access process; wherein, the message in the random access process may be an RAR message, and may also be Message 4.

In this implementation, the resource indication information may include: the resource of the control channel. Alternatively, it may further include the transmission mode of the control channel, such as the number of times of retransmission, etc.

In this embodiment, the first transmitting unit 601 may performs multiple times of retransmission on the control channel by using cross-subframe scheduling and same-subframe scheduling.

With the apparatus of this embodiment, narrowband UE may efficiently operate in wideband carriers, and a goal of saving power consumption in receiving may be achieved.

### Embodiment 5

An embodiment of this disclosure provides terminal equipment, including the apparatus for transmitting a control channel as described in Embodiment 3.

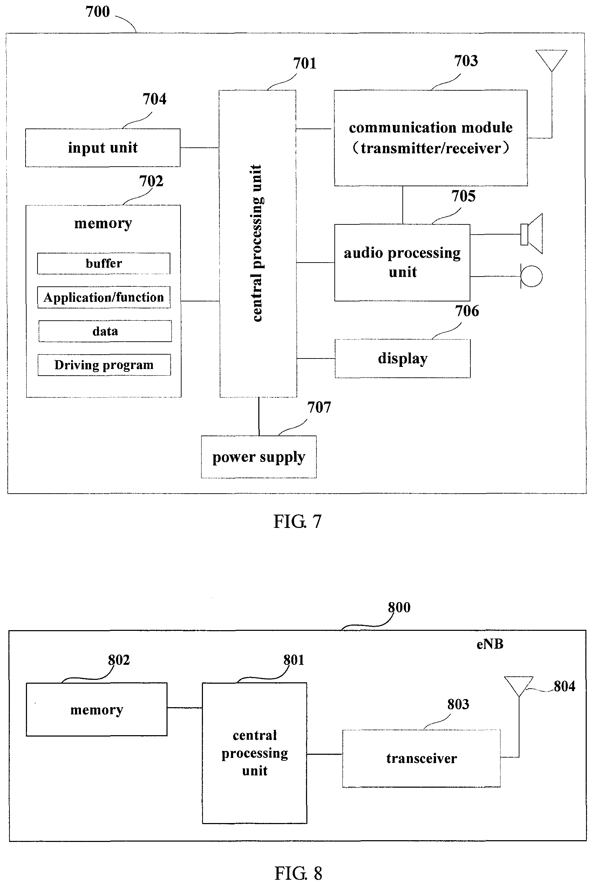

FIG. 7 is a schematic diagram of a structure of the terminal equipment of the embodiment of this disclosure. As shown in FIG. 7, the terminal equipment 700 may include a central processing unit 701 and a memory 702, the memory 702 being coupled to the central processing unit 701. It should be noted that this figure is illustrative only, and other types of structures may also be used, so as to supplement or replace this structure and achieve a telecommunications function or other functions.

In an implementation, the functions of the apparatus for transmitting a control channel may be integrated into the central processing unit 701, and the central processing unit 701 carries out the functions of the apparatus for transmitting a control channel described in Embodiment 3; wherein, functions of the apparatus for transmitting a control channel are incorporated herein, and shall not be described herein any further.

In another implementation, the apparatus for transmitting a control channel and the central processing unit 701 may be configured separately. For example, the apparatus for transmitting a control channel may be configured as a chip connected to the central processing unit 701, with its functions being realized under control of the central processing unit 701.

As shown in FIG. 7, the terminal equipment 700 may further include a communication module 703, an input unit 704, an audio processing unit 705, a display 706 and a power supply 707. It should be noted that the terminal equipment 700 does not necessarily include all the parts shown in FIG. 7, and furthermore, the user equipment 700 may include parts not shown in FIG. 7, and the prior art may be referred to.

os shown in FIG. 7, the central processing unit 701 is sometimes referred to as a controller or control, and may include a microprocessor or other processor devices and/or logic devices. The central processing unit 701 receives input and controls operations of every components of the user equipment 700.

In this embodiment, the memory 702 may be, for example, one or more of a buffer memory, a flash memory, a hard drive, a mobile medium, a volatile memory, a nonvolatile memory, or other suitable devices, which may store the above configuration related information, and may further store a program executing related information. And the central processing unit 701 may execute the program stored in the memory 702, so as to realize information storage or processing, etc. Functions of other parts are similar to those of the prior art, which shall not be described herein any further. The parts of the user equipment 700 may be realized by specific hardware, firmware, software, or any combination thereof, without departing from the scope of the present disclosure.

With the terminal equipment of this embodiment, narrowband UE may efficiently operate in wideband carriers, and a goal of saving power consumption in receiving may be achieved.

### Embodiment 6

An embodiment of this disclosure provides an eNB, including the apparatus for transmitting a control channel as described in Embodiment 4.

FIG. 8 is a schematic diagram of a structure of the eNB of the embodiment of this disclosure. As shown in FIG. 8, the eNB 800 may include a central processing unit (CPU) 801 and a memory 802, the memory 802 being coupled to the central processing unit 801. In this embodiment, the memory 802 may store various data, and furthermore, it may store a program for information processing, and execute the program under control of the central processing unit 801, so as to receive various information transmitted by terminal equipment, and transmit various information to the terminal equipment.

In an implementation, the functions of the apparatus for transmitting a control channel may be integrated into the central processing unit 801, and the central processing unit 801 carries out the functions of the apparatus for transmitting a control channel described in Embodiment 4; wherein, functions of the apparatus for transmitting a control channel are incorporated herein, and shall not be described herein any further.

In another implementation, the apparatus for transmitting a control channel and the central processing unit 801 may be configured separately. For example, the apparatus for transmitting a control channel may be configured as a chip connected to the central processing unit 801, with its functions being realized under control of the central processing unit 801.

Furthermore, as shown in FIG. 8, the eNB 800 may include a transceiver 803, and an antenna 804, etc. In this embodiment, functions of the above components are similar to those in the prior art, and shall not be described herein any further. It should be noted that the eNB 800 does not necessarily include all the parts shown in FIG. 8, and furthermore, the eNB 800 may include parts not shown in FIG. 8, and the prior art may be referred to.

With the eNB of this embodiment, narrowband UE may efficiently operate in wideband carriers, and a goal of saving power consumption in receiving may be achieved.

### Embodiment 7

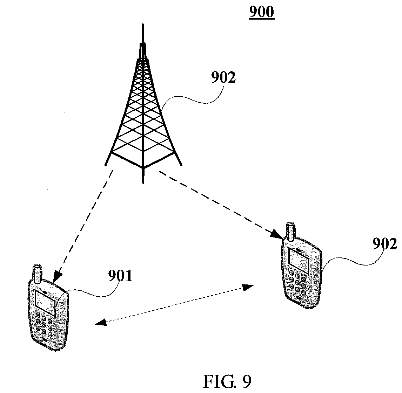

An embodiment of this disclosure provides a communication system. FIG. 9 is a schematic diagram of topology of the communication system. As shown in FIG. 9, the communication system 900 includes terminal equipment 901 and an eNB 902.

In this embodiment, the eNB 902 is configured to transmit a control channel in a resource of the control channel, and indicate the terminal equipment 901 the resource of the control channel;
and wherein, the terminal equipment 901 is configured to determine the resource of the control channel, and detect the control channel in the determined resource of the control channel.

In this embodiment, the terminal equipment 901 may use the method for transmitting a control channel described in Embodiment 1, that is, carrying out the functions of the apparatus for transmitting a control channel described in Embodiment 3, the contents of Embodiment 1 and Embodiment 3 being incorporated herein, and being not going to be described herein any further.

In this embodiment, the eNB 902 may use the method for transmitting a control channel described in Embodiment 2, that is, carrying out the functions of the apparatus for transmitting a control channel described in Embodiment 4, the contents of Embodiment 2 and Embodiment 4 being incorporated herein, and being not going to be described herein any further.

With the communication system of this embodiment, narrowband UE may efficiently operate in wideband carriers, and a goal of saving power consumption in receiving may be achieved.

An embodiment of the present disclosure provides a computer readable program code, which, when executed in an apparatus for transmitting a control channel or terminal equipment, will cause a computer unit to carry out the method for transmitting a control channel described in Embodiment 1 in the apparatus for transmitting a control channel or the terminal equipment.

An embodiment of the present disclosure provides a computer readable medium, including a computer readable program code, which will cause a computer unit to carry out the method for transmitting a control channel described in Embodiment 1 in an apparatus for transmitting a control channel or terminal equipment.

An embodiment of the present disclosure provides a computer readable program code, which, when executed in an apparatus for transmitting a control channel or an eNB, will cause a computer unit to carry out the method for transmitting a control channel described in Embodiment 2 in the apparatus for transmitting a control channel or the eNB.

An embodiment of the present disclosure provides a computer readable medium, including a computer readable program code, which will cause a computer unit to carry out the method for transmitting a control channel described in Embodiment 2 in an apparatus for transmitting a control channel or an eNB.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An apparatus for transmitting a control channel, applicable to terminal equipment, the apparatus comprising:
a determining unit configured to determine a resource of the control channel; and
a detecting unit configured to detect the control channel in the resource of the control channel determined by the determining unit.

2. The apparatus according to claim 1, wherein the determining unit comprises:
a first determining unit configured to determine the resource of the control channel according to a fixed subframe and/or a fixed physical resource block pair for transmitting a control channel agreed between the terminal equipment and an eNB after the terminal equipment detects a synchronization signal and a physical broadcast channel.

3. The apparatus according to claim 2, wherein the physical broadcast channel includes a transmission mode of the control channel and/or indication information on resource partition.

4. The apparatus according to claim 1, wherein the determining unit comprises:
a second determining unit configured to determine the resource of the control channel according to information included in the physical broadcast channel after the terminal equipment detects a synchronization signal and a physical broadcast channel.

5. The apparatus according to claim 4, wherein the information included in the physical broadcast channel includes: resource configuration information of the control channel, and/or the number of retransmission of the control channel, and/or the number of retransmission of a data channel scheduled by the control channel, and/or positions of the resource of the control channel in a time domain and in a frequency domain, and/or a transmission starting position of the resource of the control channel and the number of retransmission, and/or a frequency domain position of the resource of the control channel and the number of retransmission.

6. The apparatus according to claim 5, wherein the apparatus further comprises:
a detecting unit configured to detect and receive the control channel according to the number of retransmission of the control channel, and/or detect and receive the data channel according to the number of retransmission of the data channel.

7. The apparatus according to claim 1, wherein the determining unit comprises:
an acquiring unit configured to obtain resource indication information of the control channel from an eNB when the terminal equipment is in a random access process; and
a third determining unit configured to determine the resource of the control channel according to the resource indication information;
wherein, the resource indication information includes the resource of the control channel and/or the transmission mode of the control channel.

8. The apparatus according to claim 1, wherein the resource of the control channel in a common search space and the resource of the control channel in a UE-specific search space are separated in the time domain.

9. An apparatus for transmitting a control channel, applicable to an eNB, the apparatus comprising:
a first transmitting unit configured to transmit a control channel in a resource of the control channel; and
a detecting unit configured to indicate terminal equipment the resource of the control channel, so that the terminal equipment detects the control channel in the resource of the control channel.

10. The apparatus according to claim 9, wherein the indicating unit comprises:
a first indicating unit configured to indicate the terminal equipment the resource of the control channel according to an agreement between the eNB and the terminal equipment.

11. The apparatus according to claim 10, wherein the apparatus further comprises:
a second transmitting unit configured to transmit the transmission mode of the control channel and/or indication information on resource partition via a physical broadcast channel.

12. The apparatus according to claim 9, wherein the indicating unit further comprises:
a second indicating unit configured to indicate the resource of the control channel via information included in a physical broadcast channel.

13. The apparatus according to claim 12, wherein the information included in the physical broadcast channel includes: resource configuration information of the control channel, and/or the number of retransmission of the control channel, and/or the number of retransmission of a data channel scheduled by the control channel, and/or positions of the resource of the control channel in a time domain and a frequency domain, and/or a transmission starting position of the resource of the control channel and the number of retransmission, and/or a frequency domain position of the resource of the control channel and the number of retransmission.

14. The apparatus according to claim 13, wherein,
the first transmitting unit performs multiple times of retransmission on the control channel and/or the data channel by using cross-subframe scheduling and same-subframe scheduling.

15. The apparatus according to claim 9, wherein the indicating unit comprises:
a third indicating unit configured to indicate the terminal equipment the resource of the control channel via resource indication information included in a message in a random access process; wherein, the resource indication information includes: the resource of the control channel and/or the transmission mode of the control channel.

16. The apparatus according to claim 9, wherein the resource of the control channel in a common search space and the resource of the control channel in a UE-specific search space are separated in the time domain.

17. A communication system, comprising terminal equipment and an eNB, wherein,
the eNB is configured to transmit a control channel in a resource of the control channel, and indicate the terminal equipment the resource of the control channel;
and the terminal equipment is configured to determine the resource of the control channel, and detect the control channel in the determined resource of the control channel.

18. The system according to claim 17, wherein,
the eNB is configured to perform multiple times of retransmission on the control channel and/or a data channel scheduled by the control channel by using cross-subframe scheduling and same-subframe scheduling.

19. The system according to claim 17, wherein,
the terminal equipment is configured to determine the resource of the control channel according to a resource for transmitting a control channel agreed with the eNB, or determine the resource of the control channel according to information included in a physical broadcast channel, or determine the resource of the control channel according to information included in a message in a random access process.

20. The system according to claim 17, wherein,
the resource of the control channel in a common search space and the resource of the control channel in a UE-specific search space are separated in the time domain.
